# EUROPEAN PATENT APPLICATION

(11) **EP 4 813 562 A1**
(43) Date of publication of application: **30.09.2026**
(21) Application number: 26166077.3
(22) Date of filing: 19.03.2026
(51) Int. Cl.: B23K 37/04, B05B 12/20, B05B 13/02

(54) **JIG AND SYSTEM**

(30) Priority: 24.03.2025 JP 2025049009
(71) Applicant: TAIKISHA LTD., Tokyo 160-6129 (JP)
(72) Inventor: HIGASHI, Yoshio, Tokyo, 1606129 (JP); SUZUKI, Hiroyuki, Tokyo, 1606129 (JP); WATANABE, Seidai, Tokyo, 1606129 (JP)
(74) Representative: Mathys & Squire

(57) **Abstract**

A jig for placing a workpiece thereon, wherein surface processing by metal spraying is performed on a part of a region of the jig.

## Description

### BACKGROUND OF THE INVENTION

### Field of the Invention

The present invention relates to a jig and a system.

### Description of the Related Art

A technique is known in which a decorative film is laminated onto a workpiece such as an automobile part to provide various decorations. When such a decorative film is laminated onto a workpiece, it is necessary to trim an excess portion.

Japanese Patent Application Laid-Open No. 2011-110873 discloses cutting off an excess region by irradiating a laser along a contour line of a region to be decorated. However, in the technique described in Japanese Patent Application Laid-Open No. 2011-110873, since an end portion of a film is cut or a portion where a film is not laminated to a jig for holding a workpiece is cut, there is no influence on the jig by the laser, and there is no need to consider the durability of the jig. On the other hand, in a case where a film is laminated to a workpiece and a jig, it is necessary to perform cutting by irradiating a laser onto the jig, but when a laser is irradiated onto the jig, the jig may be affected.

### SUMMARY OF THE INVENTION

The present invention has been made in view of the above problems, and provides a technique for improving the durability of a jig.

According to one aspect of the present invention, there is provided a jig as specified in claim 1. Optional features are specified in claim 2 to 10.

### BRIEF DESCRIPTION OF THE DRAWINGS

FIG. 1 is a diagram showing a positional relationship among a decorative film, a workpiece, a workpiece holding jig, and a base jig according to an embodiment.
FIG. 2 is an explanatory diagram of a laser device and a metal coating by metal spraying according to an embodiment.
FIG. 3 is a diagram showing an example of a metal spraying range on a base jig according to an embodiment.
FIG. 4 is a diagram showing an example of a metal spraying range on a workpiece holding jig according to an embodiment.
FIG. 5 is a diagram showing an example of a plurality of holes on a workpiece holding jig according to an embodiment.
FIG. 6 is a diagram showing an example of a gripping device that grips a workpiece holding jig according to an embodiment.

### DESCRIPTION OF THE EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### <OVERALL CONFIGURATION>

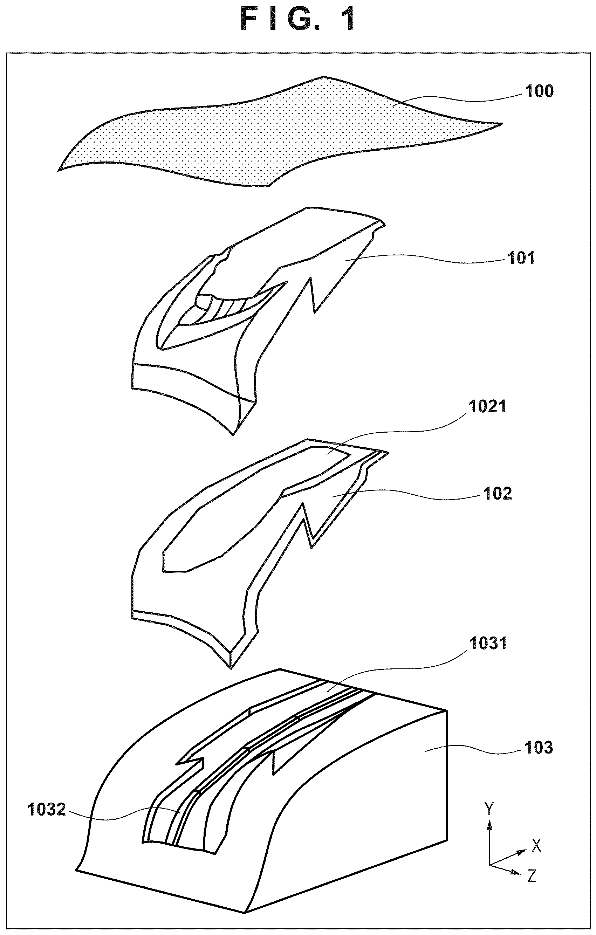

First, with reference to FIG. 1, a relationship among a decorative film, a workpiece, a workpiece holding jig, and a base jig according to an embodiment will be described. In the present embodiment, the jig is configured as split jigs, and includes a workpiece holding jig 102 and a base jig 103. Note that, in the present embodiment, description will be given by taking two split jigs as an example, but a single integrated jig may be used instead of the split jigs, or three or more split jigs may be used.

The base jig 103 is a large jig serving as a foundation, and the workpiece holding jig 102 is placed and fixed on the base jig 103. The base jig 103 includes one or more concave portions 1031 and one or more convex portions 1032 on its upper surface. On the other hand, the workpiece holding jig 102 includes convex portions (not shown) and concave portions (not shown) corresponding to the concave portions 1031 and the convex portions 1032 on its bottom surface.

Each jig is positioned and fixed by the concave portion 1031 of the base jig 103 fitting with the convex portion of the bottom surface of the workpiece holding jig 102, and the convex portion 1032 of the base jig 103 fitting with the concave portion of the bottom surface of the workpiece holding jig 102. Various workpiece holding jigs 102 can be placed on the base jig 103. A set of a workpiece 101, which is an object to which the decorative film 100 is laminated, and a workpiece holding jig 102 having a shape corresponding to the shape of the workpiece 101 is prepared in advance. Then, by exchanging the set of the workpiece 101 and the workpiece holding jig 102 dedicated to the workpiece 101, the decorative film 100 can be easily laminated onto various workpieces 101 without changing the base jig 103.

The workpiece holding jig 102 includes one or more concave portions 1021 on its upper surface, which fit with a convex shape of a bottom surface (not shown) of the workpiece 101. Thus, the workpiece 101 placed on the workpiece holding jig 102 is positioned and fixed. Note that the workpiece holding jig 102 may include one or more convex portions (not shown) on its upper surface instead of the one or more concave portions 1021, and in that case, they may fit with a concave shape of the bottom surface (not shown) of the workpiece 101. Further, the workpiece holding jig 102 may include one or more concave portions 1021 and one or more convex portions, and in that case, they may fit with one or more convex shapes and one or more concave shapes, respectively, of the bottom surface (not shown) of the workpiece 101.

The workpiece 101 is, for example, a vehicle body part, and as an example, is a bumper of a vehicle. In FIG. 1, only a symmetrical half of the workpiece 101, the workpiece holding jig 102, and the base jig 103 is depicted, and in reality, another half exists in the X direction.

In a state where the workpiece holding jig 102 is placed on the base jig 103 and the workpiece 101 is further placed on the workpiece holding jig 102, the decorative film 100 is laminated onto the workpiece 101 using a vacuum laminating device (not shown). The decorative film 100 can be configured with various colors, patterns, and the like, and the object can be easily decorated by vacuum laminating onto the object.

During the decoration, the decorative film 100 is also laminated around the workpiece 101, that is, on the workpiece holding jig 102 and the base jig 103. An operation of removing unnecessary film is performed by trimming the periphery of the workpiece 101 with a trimming device (for example, a laser irradiation device) not shown. At this time, when the unnecessary film is cut by laser irradiation, there is a possibility that the workpiece holding jig 102 and/or the base jig 103 existing under the laser irradiation will be damaged, which may affect the durability of these jigs. This is because the workpiece holding jig 102 and the base jig 103 are often formed of resin, and in that case, the jigs may be damaged by being exposed to a CO2 laser or UV light for curing the decorative film 100 laminated to the workpiece 101.

### <METAL SPRAYING>

Therefore, in the present embodiment, surface processing by metal spraying is performed on at least a part of the surface of the workpiece holding jig 102 and/or the base jig 103. This can improve the durability of the jigs. Metal spraying is a technique used to prevent corrosion of an object, and a highly durable protective coating can be formed by melting a metal such as zinc or aluminum and spraying fine particles thereof at high speed onto the surface of the object.

In the present embodiment, metal spraying using an aluminum-based alloy is performed. In general, aluminum has a high reflectivity and most of the light is specularly reflected, so if a coating is simply formed of aluminum, there is a possibility that laser light reflected on the coating surface will damage the decorative film 100 or the workpiece 101. Therefore, by using metal spraying as the method for forming the metal coating, the metal is coated while creating irregularities on the surface. These irregularities cause the laser light to be diffused on the surface of the metal coating, and damage due to reflected light can be prevented.

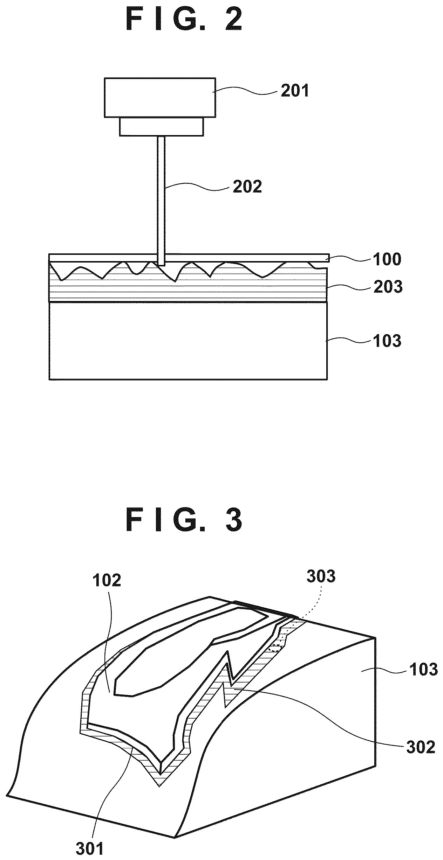

FIG. 2 is an explanatory diagram of a laser device and a metal coating by metal spraying according to the present embodiment. FIG. 2 shows a state when the decorative film 100 is cut and trimmed using laser light 202 irradiated from a laser device 201. In FIG. 2, a part of the surface of the base jig 103 is surface-processed by forming a metal coating 203 having an irregular shape by metal spraying on a part of the surface of the base jig 103.

### <SPRAYING RANGE>

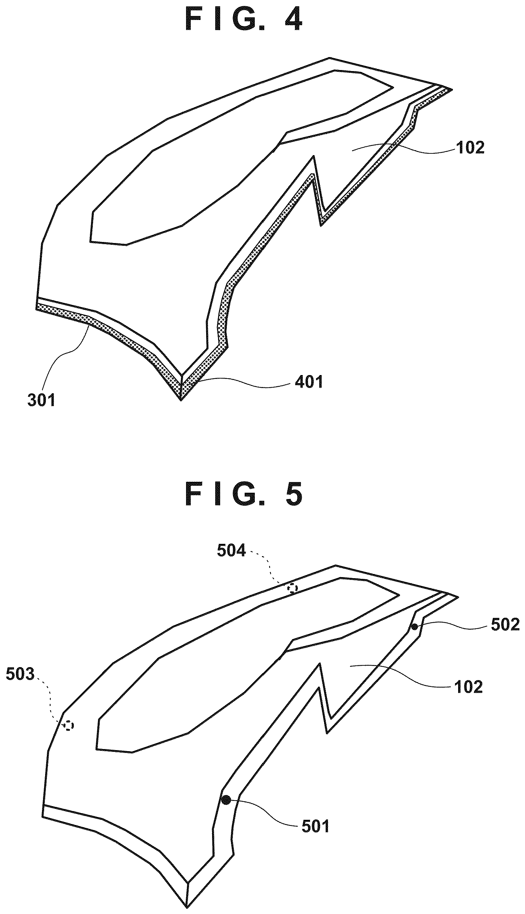

Next, an example of a metal spraying range according to the present embodiment will be described with reference to FIG. 3 and FIG. 4.

FIG. 3 is a diagram showing an example of a metal spraying range on the base jig according to the present embodiment. In a state where the workpiece holding jig 102 is placed on the base jig 103, metal spraying is applied to a partial region 302 of the upper surface of the base jig 103 within a predetermined distance range (for example, a range from the boundary 301 to 30 mm therefrom) from a boundary 301 between the two jigs. The region 302 corresponds to a part of a region on the base jig 103 that is exposed to space in a state where the workpiece holding jig 102 is placed on the base jig 103. Note that FIG. 2 can be, for example, a cross-sectional view at the position of a region 303 in FIG. 3.

Next, FIG. 4 is a diagram showing an example of a metal spraying range on the workpiece holding jig according to the present embodiment. Metal spraying is applied to a partial region 401 of a side surface of the workpiece holding jig 102. The region 401 is a region exposed to a space in a state where the workpiece holding jig 102 is placed on the base jig 103 and the workpiece 101 is placed on the workpiece holding jig 102. The region 401 can be, for example, a partial region of the side surface of the workpiece holding jig 102 within a predetermined distance range from the boundary 301 between the base jig 103 and the workpiece holding jig 102.

Thus, when trimming the decorative film 100 laminated on the base jig 103 and/or the workpiece holding jig 102, a region that may be irradiated with laser light can be covered with a metal coating having an irregular shape. Therefore, it is possible to reduce the risk of damaging the base jig 103 and/or the workpiece holding jig 102, and it is possible to improve the durability of these jigs.

### <GRIPPING SYSTEM>

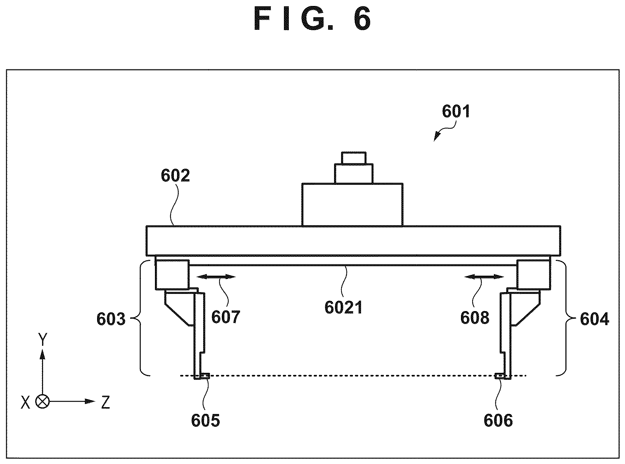

Next, an example of a gripping system including a workpiece holding jig and a gripping device according to the present embodiment will be described with reference to FIG. 5 and FIG. 6. FIG. 5 is a diagram showing an example of a plurality of holes on the workpiece holding jig according to the present embodiment. As shown in FIG. 5, a plurality of holes 501 to 504 are arranged on the side surface of the workpiece holding jig 102. Each hole may be, for example, a cylindrical hole with a bottom having a diameter of about 20 mm and a depth of about 50 mm. These holes may be provided in a side surface region (that is, an upper region of the side surface) other than the metal spraying region 401 shown in FIG. 4.

Next, FIG. 6 is a diagram showing an example of a gripping device that grips the workpiece holding jig according to the present embodiment. An external view of the gripping device 601 when viewed in the X-axis direction in FIG. 1 is shown. The gripping device 601 includes a first gripping portion 603 and a second gripping portion 604 on a rail 6021 provided in a support portion 602. The first gripping portion 603 is configured to be slidable in the Z direction on the rail 6021 following a double-headed arrow 607. Similarly, the second gripping portion 604 is configured to be slidable in the Z direction on the rail 6021 following a double-headed arrow 608.

The first gripping portion 603 includes a gripping pin 605 for gripping the workpiece holding jig 102 at its end. Similarly, the second gripping portion 604 includes a gripping pin 606 for gripping the workpiece holding jig 102 at its end. Each pin can be, for example, a cylindrical pin having a diameter of about 8 to 18 mm. A control portion (not shown) of the gripping device 601 can control the first gripping portion 603 and the second gripping portion 604 to move in a direction parallel to the Z direction.

Thus, the workpiece holding jig 102 can be gripped by inserting the gripping pin 605 and the gripping pin 606 into the hole 503 and the hole 501, respectively, of the workpiece holding jig 102 shown in FIG. 5. Then, by the control portion (not shown) of the gripping device 601 controlling a raising/lowering mechanism (not shown), the workpiece holding jig 102 can be raised away from the base jig 103 or lowered to be placed on the base jig 103.

Note that another set of the gripping portions in FIG. 6 is arranged at positions separated in the X direction. The distance in the X direction between the gripping portions can be freely adjusted by the control portion (not shown) of the gripping device 601. For example, each set of the gripping portions may be configured to be freely movable along a rail arranged along the X direction. Then, the workpiece holding jig 102 can be gripped by inserting each gripping pin provided in the other set of gripping portions into the hole 504 and the hole 502, respectively, of the workpiece holding jig 102 shown in FIG. 5.

By gripping the workpiece holding jig 102 at four locations (actually, a total of eight locations including the four locations in the other half extending in the X direction) in this way, it becomes possible to stably grip the workpiece holding jig 102. By this gripping system, the workpiece holding jig 102 can be freely placed on the base jig 103 or the workpiece holding jig 102 can be separated from the base jig 103. Therefore, since the decorative film can be laminated by placing various workpieces 101 and workpiece holding jigs 102 dedicated to the workpieces on the base jig 103, various workpieces can be easily decorated without replacing the heavy base jig 103.

As described above, according to the present embodiment, surface processing by metal spraying is performed on a partial region of a jig for placing a workpiece. Thus, it is possible to prevent the jig from being damaged by laser light when trimming the decorative film. Therefore, the durability of the jig can be improved. Furthermore, since the laser light is scattered by the metal coating having irregularities formed by metal spraying, the laser light can be attenuated. As a result, it is possible to prevent or suppress the laser light reflected by the jig from damaging the decorative film or the workpiece.

Then, by making the partial region of the jig to which metal spraying is applied a part of a region on the jig that is exposed to space in a state where the workpiece is placed on the jig, metal spraying can be applied focusing on a portion that may be irradiated with laser light during trimming. Therefore, material costs required for metal spraying can be suppressed.

In addition, since metal spraying can be performed while avoiding a region where the workpiece and the jig contact each other when the workpiece is placed on the jig, it is possible to prevent the metal coating formed by metal spraying from peeling off due to contact during placement. Similarly, in a case where the jig is a split jig, by performing metal spraying while avoiding a region where the jigs contact each other, it is possible to prevent the metal coating formed by metal spraying from peeling off due to contact between the jigs during placement when the workpiece holding jig 102 is placed on the base jig 103.

### [Modification]

In the embodiment described above, a case where the jig is composed of two split jigs has been described, but limitation is not made to this example. The embodiment described above can also be applied to a case where a workpiece is placed on one integrated jig and a decorative film is laminated to the workpiece. That is, metal spraying may be applied to a part of a region on the jig that is exposed to a space when the workpiece is placed on one jig (for example, a region on the jig within a predetermined distance range from a boundary between the workpiece and the jig (that is, an end portion of the jig)).

Further, in the embodiment described above, an example in which a metal coating is formed on the surface of the jig by performing metal spraying has been described, but no limitation is made to metal spraying. As long as irregularities can be formed on the surface of the jig to scatter laser light and the jig can be prevented from being damaged by the laser light, a coating for protecting the jig may be formed by a method other than metal spraying.

### <OTHER EMBODIMENTS>

Further, it is possible to supply a program for realizing one or more functions described in each embodiment to a system or an apparatus via a network or a storage medium, and for a control computer of the system or the apparatus to read and execute this program. The present invention can also be realized in such a form.

The invention is not limited to the foregoing embodiments, and various variations/changes are possible within the spirit of the invention.

## Claims

1. A jig for placing a workpiece thereon,
wherein surface processing by metal spraying is performed on a part of a region of the jig.

2. The jig according to claim 1,
wherein the part of a region is a part of a region on the jig that is exposed in a state where the workpiece is placed on the jig.

3. The jig according to claim 1 or 2, wherein the jig includes:
a first jig (102) for holding the workpiece; and
a second jig (103) for holding the first jig,
wherein the part of a region is a region (401) on the first jig that is exposed and a part of a region (302) on the second jig that is exposed, in a state where the workpiece is placed on the first jig and the first jig is placed on the second jig.

4. The jig according to claim 3,
wherein the part of the region on the second jig is a region on the second jig within a predetermined distance range from a boundary between the first jig and the second jig in a state where the first jig is placed on the second jig.

5. The jig according to any one of claims 1 to 3,
wherein the surface processing is metal coating processing by the metal spraying.

6. The jig according to claim 3 or 4,
wherein the first jig is provided with a plurality of holes (201, 502, 503, 504) for inserting a plurality of gripping pins (605, 606) of a gripping device (601) that grips the first jig.

7. The jig according to claim 6,
wherein the plurality of holes are provided in a region on the first jig where the metal spraying is not performed.

8. The jig according to claim 6 or 7,
wherein the plurality of holes are provided in a side surface region of the first jig in a state where the first jig is placed on the second jig.

9. A system comprising:
the jig according to any one of claims 6 to 8; and
the gripping device.

10. The system according to claim 9, wherein the gripping device includes the plurality of gripping pins,
and the gripping device grips the first jig by inserting the plurality of gripping pins into the plurality of holes of the first jig.
